# NEUE EUROPÄISCHE PATENTSCHRIFT

(11) **EP 1 427 767 B2**
(45) Veröffentlichungstag und Bekanntmachung des Hinweises auf die Entscheidung über den Einspruch: **08.04.2015**
(45) Hinweis auf die Patenterteilung: 26.01.2005
(21) Anmeldenummer: 02776991.8
(22) Anmeldetag: 05.09.2002
(51) Int. Cl.: B65D 83/68, C08G 59/00, C09D 163/00

(54) **ZWEIKOMPONENTEN-EPOXI-LACKSPRÜHDOSE**
AEROSOL CAN CONTAINING A TWO-COMPONENT EPOXY-PAINT
BOMBE A AEROSOL CONTENANT UNE PEINTURE EPOXY A DEUX COMPOSANTS

(30) Priorität: 07.09.2001 DE 10144133
(43) Veröffentlichungstag der Anmeldung: 16.06.2004
(73) Patentinhaber: Peter Kwasny GmbH, 74831 Gundelsheim (DE)
(72) Erfinder: KWASNY, Peter, 8200 Schaffhausen (CH)
(74) Vertreter: Thiel, Christian
(86) Internationale Anmeldenummer: PCT/EP2002/009918
(87) Internationale Veröffentlichungsnummer: WO 2003/022903

(56) Entgegenhaltungen:
- WO-A-85/00157
- WO-A1-84/01557
- DE-A- 19 636 221
- DE-A1- 3 610 345
- DE-A1- 10 005 332
- DE-A1- 19 655 104
- JP-A- S63 236 556
- US-A- 4 769 395
- US-A- 5 638 992

## Beschreibung

Die Erfindung betrifft Zweikomponenten-Lacksprühdosen mit einer Aerosolzubereitung für Zweikomponenten-Epoxi-Lacke für die Allgemeine Industrie, Haushaltsindustrie, Bauindustrie, Automobilindustrie und Autoreparaturindustrie.

Aerosolzusammensetzungen für Lacksprühdosen auf unterschiedlicher Basis sind seit Jahren bekannt. Vorzugsweise handelt es sich dabei um Einkomponenten-(1K)-Aerosolzusammensetzungen für die Do-It-Yourself, Automobil- und Autoreparaturindustrie.

In der letzten Zeit bestimmen für den Automobil- und Reparaturbereich mehr und mehr Zweikomponenten-PUR-Systeme in Lacksprühdosen die Marktentwicklung. Solche Zweikomponenten-(2K)-Systeme bestehen aus einer Stammkomponente, einem OH-gruppenhaltigem Acrylat- oder Polyesterharz und als Härter-Komponente einem Polyisocyanat. Eingesetzt werden solche Lacksprühdosen als Primer, Grundierungen, Grundierfüller, Füller, Decklacke, Klarlacke, etc., bevorzugt im Fahrzeugbereich für PKW, LKW, Busse, Straßenbahnen, Eisenbahnen, Tankfahrzeuge und Container.

Dagegen gibt es bis heute praktisch keine 2K-Aerosol-Zusammensetzungen in Lacksprühdosen für die allgemeine Industrie, Haushaltsindustrie, Bauindustrie, Maschinenbauindustrie, etc. Bekannt sind in diesen Bereichen Beschichtungen mit 2K-Epoxi-Systemen, die entweder mit Spritzgeräten, Rolle, Pinsel, oder mit Kamm, Rakel und Spachtel im Gießverfahren aufgetragen werden und als Zweikomponentensystem kalthärtend, d. h. bei Raumtemperatur aushärtend, sind. Bislang ist es aber nicht gelungen, in 2K-Lacksprühdosen einsatzfähige Epoxi-Systeme bereitzustellen.

Üblicherweise werden Ausbesserungen und Reparaturen solcher Systeme daher geräteaufwendig, arbeitsaufwendig und zeitaufwendigem in Handarbeit mit identischen 2K-Epoxi-Materialien durchgeführt. Dafür benötigt man Spritzgeräte, Gießvorrichtungen, Rollen, Pinsel, Kamm, Rakel, Flächenspachtel, Spritzbehälter und Mischgefäße. Mischungsverhältnisse zwischen Stammkomponente und Härter müssen volumetrisch oder gravimetrisch exakt dosiert werden, geeignete Präzisionswaagen oder volumetrische Meßeinrichtungen müssen zur Verfügung stehen.

Auf diesen Aufwand könnte man verzichten, wenn man die Reparatur, Ausbesserung oder Beseitigung von Schäden oder Neubeschichtungen mit einer Aerosolzubereitung für 2K-Epoxi-Lacksprühdosen vornimmt.

Ziel der Erfindung ist daher die Bereitstellung einer 2K-Lacksprühdose mit einem Epoxi-Lacksystem, die insbesondere für Reparaturzwecke eingesetzt werden kann.

Dieses Ziel wird mit einer 2K-Lacksprühdose gemäß Anspruch 1 erreicht.

Entsprechend betrifft die Erfingung eine Zweikomponenten-Lacksprühdose mit einer Aerosolzubereitung, insbesondere für die Automobilindustrie und für Autoreparaturzwecke, enthaltend eine Bindernitteikomponente und eine Härterkomponente, **dadurch gekennzeichnet,** daß die Bindemittelkompanente eine härtbare Epoxi-Stammkomponente, Lösemittel und Treibgas enthält und die Härterkomponente einen zur Aushärtung des Epoxibindemittels geeigneten Vernetzer, wobei die Härterkomponente in einer in der Lacksprühdose angeordneten und durch Einwirkung von außen aktivierbaren Vernetzerhülse separat von der Bindemittelkomponente untergebracht ist, wobei die Lacksprühdose eine an einem Teller im Dosenboden angeordnete Innenhülse aus Metall und einen in der innenhülse angeordneten Stößel zum Aufsprengen der Innenhülse aufweist, der durch den Teller hindurch betätigbar ist und gegen einen am dosenseitigen Ende der Innenhülse angeordneten Deckel wirkt und diesen bei Betätigung absprengt, wobei
a) die Innenhülse bodenseitig eine Metallmembran aufweist, wobei der Stößel in einen außerhalb der Innenhülse und durch den Dosenboden ragenden Auslösestift und einen innerhalb der Innenhülse angeordneten Stößel unterteilt ist oder
b) die innenhülse mit dem Teller des Dosenbodens integral geformt ist.

Der Gebrauch einer solchen neuartigen 2K-Lacksprühdose gestattet es, auf einfache Weise durch Knopfdruck den exakt zudosierten Härter aus einer separaten Aluminium-Kartusche in die Lacksprühdose zu entleeren, so daß man sie mit Topfzeiten von drei bis 24 Stunden, je nach Zusammensetzung, per Spraydosenventil und Sprühkopf punktgenau und eng begrenzt auf die beschädigte oder zu reparierende Fläche ohne sichtbare Übergänge, ohne Blasen und Löcher und ohne Furchen und Pinselstriche applizieren kann.

Üblicherweise kann man mit Sprühdosenapplikationen keine festkörperreichen oder High-Solid-Beschichtungen vornehmen. Eine handelsübliche Lacksprühdose enthält festkörperarme, meist physikalisch oder oxidativ trocknende 1K-Lacksysteme, die von ihren chemischen Zusammensetzungen, Festkörper und Schichtdicke völlig ungeeignet sind, um 2K-Epoxi-Systeme auszubessern, zu reparieren oder neu zu beschichten.

Gemäß DE 196 36 221 C2 ist es möglich, die Ausbringrate aus der Lacksprühdose von üblicherweise acht bis zehn Gramm pro zehn Sekunden auf 20 bis 25 g in zehn Sekunden zu erhöhen. Hiermit lassen sich mit einem vertretbaren Arbeitsaufwand und in wenigen Sprühgängen auch deutlich höhere Schichtdicken mit hohem Arbeitstempo erzielen. Ermöglicht wird dies durch die Verwendung einer Propan/Butan-Treibgasmischung mit hohem Propan-Anteil in Verbindung mit einer Breitstrahldüse. Dies ermöglicht das Ausbringen des Doseninhaltes mit einem erhöhten konstanten Druck und mit hoher Ausbringrate.

Durch Kombination der Lehre der DE 196 36 221 C2 mit der Erfindung werden besonders gute Ergebnisse erzielt.

Mit handelsüblichen, frei erwerbbaren oder selbst hergestellten 2K-Epoxi-Systemen, in der Lackformulierung entweder lösemittelhaltig, lösemittelfrei oder wasserverdünnbar, angewandt in 2K-Lacksprühdosen, erhält man überraschenderweise Ausbesser-Beschichtungen, die alle Anforderungen an sichere, punktgenaue Reparaturen, Ausbesserungen und Neubeschichtungen, einfache Applikation, umweltverträgliche Abfallbeseitigung, sichere Handhabung, schnelle Durchtrocknung, maßgenaue Aushärtung, Chemikalienbeständigkeit, langjährige Gebrauchsfähigkeit und Widerstandsfähigkeit erfüllen.

Nimmt man als Lacksprühdose zur Formulierung von 2K-Epoxi-Aerosolzusammensetzungen separate Kunststoffhülsen, wie sie beispielsweise in der WO-A-8 500 175 (Zarga) beschrieben sind, erhält man brauchbare Ergebnisse. In einigen Fällen, trotz separater Abfüllung der Epoxi-Stammkomponente in der Lacksprühdose und des Epoxi-Härters in der separaten Kunststoff-Kartusche, kann es aber zu einer verkürzten Lagerstabilität der 2K-Aerosolzusammensetzung kommen, zumeist in Verbindung mit Lösungsmitteln mit hoher Kriechfähigkeit. Da alle Lacksprühdosen, je nach Temperatur, unter einem Druck bis zu neun bar stehen, erweisen sich Kunststoff-Härter-Kartuschen vom Typ Zarga nicht immer als optimal. Auf die Zarga-Technologie wird hier ausdrücklich bezug genommen.

Durch die Wände der Kunststoff-Kartusche kann es zu einem Druckausgleich kommen, d. h. Treibgas, Feuchtigkeit in Form von Wasserdampf und Lösemittel in Gasform gelangen auch durch die Wände der Kartusche, ins Innere und führen dann zum Ausfällen und damit Unbrauchbarkeit der eingesetzten Epoxi-Härter.

Praktischerweise prüft man die Lagerstabilität aus Zeitgründen durch eine Ofenlagerung bei 50 °C. Kunststoff-Kartuschen führen teilweise und bei einigen Lösemittelkombinationen zum Ausfällen des Epoxi-Härters nach durchschnittlich zwei bis vier Wochen bei 50 °C im Ofen, wobei nach langjährigen Erfahrungen eine Ofenlagerung von drei Monaten 50 °C notwendig ist, um auf eine vertretbare Lagerzeit von ein bis zwei Jahren bei Raumtemperatur zu schließen.

Die Verwendung einer in die Dose integrierten Aluminium-Kartusche gemäß P 101 14 624.8 löst das Problem der mangelnden Lagerbeständigkeit bei den 2K-Epoxi-Aerosolzusammensetzungen. Durch Unterbindung der Gasdiffusion durch Einsatz einer Aluminium-Härterkartusche konnte man die unbedingt erforderliche Lagerstabilität von drei Monaten bei 50 °C Ofentemperatur in jedem Fall erfüllen. Eine solche Lagerstabilität wird insbesondere auch bei Verwendung aromatischer Lösemittel erreicht.

P 101 14 624.8 betrifft eine Druckdose mit einer Zarge, einem Dom zur Aufnahme eines Ventils, einem eingewölbten Boden, einer an einem Teller angeordneten Innenhülse, einem in der Innenhülse angeordneten Stößel zum Aufsprengen der Innenhülse, der durch den Teller hindurch betätigbar ist, bei der die Innenhülse über einen Federkorb mit dem Teller verbunden ist, der Federkorb einen Auslöser federnd gelagert enthält, der auf den Stößel wirkt, welcher Stößel gegen einen am dosenseitigen Ende der Innenhülse angeordneten Deckel wirkt und diesen bei Betätigung absprengt, wobei zwischen Stößel und Auslöser eine Membran angeordnet ist, welche die Innenhülse an ihrem bodentellerseitigen Ende hermetisch gegen den Inhalt der Druckdose abschließt. Dabei sind Membran und Innenhülse vorzugsweise einstückig und aus Aluminium gefertigt.

Die zuvor beschriebene Innenhülse hat zweckmäßigerweise an ihrem äußeren Ende eine Aufnahme zur Festlegung am Federkorb, wobei die Membran am Übergang der Innenhülse zur Aufnahme angeordnet ist. Zweckmäßigerweise ist die Aufnahme auch mit dem Federkorb verchlincht, insbesondere dadurch, daß das freie Ende der Aufnahme um einen außen umlaufenden Vorsprung des Federkorbs herumgeführt ist.

Der Federkorb selbst kann am Bodenteller wie auch am Ventilteller im Dom der Druckdose angeordnet sein. Bei der Anordnung im Dom erfolgt die Auslösung über einen Auslösestift, der durch eine Aufnahme auf den Stößel wirkt und nach Auslösung der Druckdose in der Aufnahme durch ein Ventilelement ersetzt wird.

Alternativ kann die Druckdose gemäß P 101 14 624.8 mit einer Zarge, einem in einem Dom zur Aufnahme eines Ventils, einem Boden, einer an einem Teller angeordneten Innenhülse, einem in der Innenhülse angeordneten Stößel zum Aufsprengen der Innenhülse, der durch den Teller hindurch betätigbar ist, auch so gestaltet sein, daß die Innenhülse an den im Boden der Dose angeordneten Teller angeformt ist, am Teller innerhalb der Innenhülse ein Federkorb gelagert ist, der Federkorb einen Auslöser federnd gelagert enthält, der auf den Stößel wirkt, wobei der Stößel gegen einen am dosenseitigen Ende der Innenhülse angeordneten Deckel wirkt und diesen bei Betätigung absprengt. Innenhülse und Teller sind dabei vorzugsweise einstückig ausgebildet und aus Aluminium gefertigt. Auch in dieser Ausführungsform ist der Federkorb vorzugsweise in einer zentralen Ausformung des Tellers festgelegt.

Es ist aber festzuhalten, daß die erfindungsgemäßen Druckdosen mit 2K-Epoxi-Lacksystemen übliche herkömmliche Zweikomponentendosen sein können und nicht auf Druckdosen der Zarga-Technologie oder der P 101 14 624.8, wie oben beschrieben, beschränkt sind. Entscheidend ist, daß die 2-K-Epoxi-Lacksysteme über die erforderliche Lagerzeit hinweg stabil bleiben, das heißt Epoxi-Stammkomponente und Epoxi-Härter zuverlässig voneinander getrennt werden.

Es gibt bis heute keine Aerosolzusammensetzungen für 2K-Epoxi-Lacksprühdosen im Markt. Entwickelt wurden 2K-Lacksprühdosen für Zweikomponenten-PUR-Systeme für Autoreparaturzwecke. Allerdings sind solche 2K-PUR-Systeme ungeeignet für die Neubeschichtung und Ausbesserung von 2K-Epoxi-Systemen.

Vor allem durch Kombination der der Lehre der DE 196 36 221 C2 mit 2K-Druckdosen der "Zarga"-Technologie und/oder der P 101 14 624.8 in Verbindung mit handelsüblichen 2K-Epoxi-Lacksystemen kommt man überraschenderweise zu Aerosolzubereitungen, mit dem gebrauchstüchtige Ausbesserungen, Reparaturen und Neubeschichtungen für die genannte Industriezweige möglich werden.

Diese Lacksprühdosen erbringen die erforderliche Ausbringungsrate von 20 bis 22 g Lackmaterial aus der Sprühdose in zehn Sekunden, um festkörperreiche und High-Solid-Systeme ausbessern zu können.

Die getrennte Abfüllung von Epoxi-Stammkomponente in der 2K-Lacksprühdose und die Abfüllung des Epoxi-Härters in einer separaten Aluminium-Kartusche, wie im Schutzrecht P 101 146 624.8 beschrieben, erbringt in jedem Fall die erforderliche Lagerbeständigkeit von ein bis zwei Jahren bei Raumtemperatur.

Einsetzbar ist die Erfindung in der allgemeinen Industrie, Haushaltsindustrie, Bauindustrie, Automobilindustrie, Autoreparaturindustrie und dergl.

Üblicherweise werden Aerosolzusammensetzungen gemäß der Erfindung eingesetzt für Bodenbeschichtungen für Kraftwerke, Brauereien, Lebensmittelbetriebe, Chemiebetriebe; in Marine, Schiffsbau und bei Booten; in der Werkserhaltung, für chemikalienfeste Anstriche; im Maschinenbau, Behälterbau, Behälterauskleidungen, Tankbeschichtungen; bei Brücken, im Straßenbau, bei Konstruktionen; bei Fliesen, Badewannen, Keramik, Porzellan; für Laminate, Bodenbeläge, GFK, Fiberglas; für Korrosionsanstriche für Konstruktionen aus Stahl, Aluminium und Zink; an Containern, Fahrzeugen, Schienenfahrzeugen; für Betonbeschichtungen, Reparaturen von Stein und Beton; sowie für Imprägnierungen, Isolierungen, Antislip- und abriebfeste Beschichtungen.

Handelsübliche 2K-Epoxi-Systeme stehen in ausreichender Zahl und in sehr breiten Variationen von Stammkomponenten und Härtern zur Verfügung. Mischungsverhältnisse für solche Systeme können von gewichtsmäßig eins zu eins bis zehn zu eins je nach Formulierungskunst variieren. Günstig für den Einsatz in Zweikomponenten-Lacksprühdosen sind Formulierungen von 3:1 bis 6:1 Stamm/Härter wegen der begrenzten Kapazität der Kartusche für den Härter, mit einer Behälterkapazität von ca. 25 g.

Besonders günstig haben sich alle Formulierungen heraus gestellt, die ein Mischungsverhältnis von gewichtsmäßig 4:1 oder 80 g zu 20 g Stamm/Härter aufweisen.

Das gestattet das Einfüllen von 60 bis 150 g, insbesondere 80 bis 120 g unverdünnter Epoxi-Stammkomponente. Für die exakte chemische Aushärtung ist in der Regel eine Variation von Stamm und Härter im Bereich von 83:17 bis 77:23 möglich, ohne daß Abweichungen in Applikation, Glanz, Aushärtung, Gebrauchsfähigkeit und Beständigkeit befürchtet werden müssen, wie aufwendige Laboruntersuchungen und Angaben der einschlägigen Rohstofflieferanten ergaben.

Vorzuziehen sind deshalb Einfüllungen von 100 bis 120g unverdünntes Epoxi-Stammaterial bei ca. 25 g Epoxi-Härter in einer Aluminium-Kartusche.

Besonders vorteilhaft sind Einwaagen von 110 bis 115 g Stammaterial bei 25 g Epoxi-Härter in der Kartusche.

Für die Spritzapplikation aus einer 2K-Lacksprühdose benötigt man Lösemittelgemische zum Erzielen einer spritzfertigen Einstellung, eines guten Verlaufs, einer glatten Oberfläche, eines ausreichenden Materialaustrags (20 bis 22 g in 10 s) und möglichst wenig vagabundierender Spritznebel.

Verdünnbar ist sowohl die Epoxi-Stammkomponente, als auch der Epoxi-Härter. Egal, ob das ursprünglich formulierte 2K-Epoxi-System lösemittelhaltig oder lösemittelfrei war, aus den Überlegungen, Erfahrungen und Versuchen empfiehlt es sich, die Epoxi-Stammkomponente mit Lösemittelgemisch und Treibgas zu versetzen und die Epoxi-Härterkomponente unverdünnt in, insbesondere eine Aluminium-Kartusche einzufüllen.

Verdünnen lassen sich 2K-Epoxi-Systeme in erster Linie mit Alkoholen, vorzugsweise Isopropanol, Aromaten, vorzugsweise Xylol, Ketonen, vorzugsweise Aceton, Estern, vorzugsweise Butylacetat, und Mischungen derselben.

Verdünnen kann man in weiten Mischungsverhältnissen von 75 g Epoxi-Stammkomponente zu 25 g Lösemittelgemisch bis zu 50 g Epoxi-Stammkomponente zu 50 g Lösemittelgemisch.

Vorteilhaft für die Sprühdosenapplikation sind Spritzviskositäten von 18" bis 30" im DIN-Becher mit 3 mm Düse.

Als günstig erwiesen sich insbesondere Viskositäten von 22" bis 26" im DIN-Becher mit 3 mm Düse, was einem Mischungsverhältnis von 75:25 bis 55:45 g entspricht.

Besonders vorteilhaft sind Mischungsverhältnisse von 60 bis 65 g Epoxi-Stammkomponente mit 35 bis 40 g Lösemittelgemisch, was ungefähr einer Viskosität von 23,5" bis 24,5" im DIN-Becher mit 3 mm Düse entspricht.

Als Lösemittel funktionieren Alkohole und Aromaten in einem begrenztem Rahmen von 10 bis 20 % zur Epoxi-Stammkomponente. In unbegrenztem Rahmen verträglich sind Ketone und Ester. Für die Spritzapplikation haben sich Gemische von Ketonen mit Estern als besonders vorteilhaft heraus gestellt. Aceton und Butylacetat im Verhältnis 50:50 bis 90:10 ergeben besonders brauchbare Spritzergebnisse, und ein optimales Eigenschaftsprofil. Besonders vorteilhaft ist eine Kombination von Aceton und Butylacetat von 80:20 bis 90:10. Idealerweise wählt man eine Kombination von 85 g Aceton und 15 g Butylacetat. Alle Angaben sind nach Gewicht.

Als Treibgas für die 2K-Lacksprühdose kommen insbesondere, Dimethylether (DME), Propan/Butan nach DE 196 36 221 C2 und Fluorkohlenwasserstoffe (Frigen 143, 144) in Frage. Für lösemittelhaltige und lösemittelfreie 2K-Epoxi-Systeme nach üblichen Lackformulierungen haben sich Propan/Butan und DME als besonders vorteilhaft heraus gestellt. Für wasserverdünnbare Lackformulierungen von 2K-Epoxi-Systemen erwies sich DME als besonders verträglich, weil andere Treibgase u. U. zu Ausfällungen führen können.

Auch das Treibgas ließ sich für brauchbare Versprühungen in weiten Verhältnissen von 75:25 bis zu 40:60 verdünnter Lack zu Treibgas einsetzen. Vorteilhaft waren alle Mischungen von 65 g vorverdünnter Epoxi-Stammkomponente zu 35 g Treibgas bis zu 40:60 Verhältnissen.

Idealerweise wurde eine 2K-Lacksprühdose mit 400 ml Inhalt befüllt mit:
- 180 g vorverdünnter Epoxi-Stammkomponente mit einem Lösemittelgemisch, wobei
- 114 g unverdünnte Epoxi-Stammkomponente und 66 g Lösemittelgemisch eingesetzt wurden. Das Lösemittelgemisch bestand aus
- 85 g Aceton und 15 g Butylacetat.

Als Treibgas wurde DME eingesetzt, wobei zu den vorverdünnten 180 g Epoxi-Stammkomponente 134 g DME zugesetzt wurde.

2K-Epoxi-Systeme existieren in praktisch unbegrenzter Vielfalt in der Lackchemie. Es gibt viele Mechanismen der chemischen Reaktion, aus denen sich handelsübliche 2K-Systeme herstellen lassen.

Die erfindungsgemäßen 2K-Lacksprühdosen haben ein äußerst breites Spektrum von Anwendungen erzielen kann, mit sehr unterschiedlichen Eigenschaften, je nach Notwendigkeiten und Erfordernissen. Dementsprechend gibt es je nach Anwendungszweck sehr breite Variationen der Lackformulierung. Aus den oben beschriebenen Einsatzgebieten resultiert eine breite Vielfalt von handelsüblichen 2K-Epoxi-Systemen, die auch in der chemischen Zusammensetzung extrem differieren können. Geeignet für die Anwendung in einer 2K-Lacksprühdose sind alle in der Chemie bekannten Reaktionsmechanismen von 2K-Epoxi-Systemen.

Epoxidharze und Epoxidhärter bilden als reaktives Gemisch das Epoxidharzbindemittel, das über Polyadditionsreaktionen aushärtet. Die Epoxid-Harze sind nach DIN 7728 oligomere Verbindungen mit mehr als einer Epoxidgruppe pro Molekül. Bei der Härtung entstehen aus meist niedrigviskosen oder niedermolekularen, monomeren und oligomeren Komponenten des Bindemittels über die Vemetzungsreaktion hochmolekulare, dreidimensionale Netzwerke. Die Netzwerkknoten entstehen durch die Reaktion der funktionellen Gruppen der Harze und Härter. (Knittel, Lehrbuch der Lacke und Beschichtungen, 2. Auflage, Band 2, 1998.)

Als Epoxid-Harze für 2K-Lacksprühdosen kommen insbesondere solche auf Basis von Glycidylethern, Glycidylestem, Glycidylaminen, cycloaliphatischen Epoxiden und Glycidylisocyanuraten in Frage.

Als Epoxi-Härter kann man insbesondere Aminhärter, wie aliphatische und cycloaliphatische Amine, aromatische Amine und modifizierte Amine, Polyamidhärter, wie Polyaminoamide, Dicyandiamid, cyclische Säureanhydride, Polyisocyanate, aminofunktionelle Polyacrylate und dergl. einsetzen.

In bestimmten Fällen ist es möglich, zu aminofunktionellen Polyacrylaten sogenannte Reaktiwerdünner, z. B. Butylacrylat hinzuzufügen, die zusätzlich durch eine Michael-Addition an der chemischen Aushärtung beteiligt sind.

In breiter Form einsatzfähige Amin-Härter werden in erster Linie durch Addukt-Bildung mit Epoxi-Basisharzen, durch Amidbildung mit Fettsäuren oder über Mannichbasen- Reaktionen mit Phenolen und Formaldehyd hergestellt.

Für verschiedene Anwendungsmöglichkeiten wurden einige Rezepturbeispiele für 2K-Epoxi-Systemen ausgewählt, die in Zweikomponenten-Lacksprühdosen gemäß der Erfindung Anwendung finden. Die Erfindung wird durch die nachstehenden Beispiele näher erläutert.

### Beispiel 1

2K-Epoxi-Fußbodenbeschichtung, lösemittelfrei, wenig vergilbend, abriebfest.

| Komponente A | |
|---|---|
| 38,5 | Beckopox EP 128 (Solutia Austria GmbH) |
| 0,4 | Aerosil 380 (Degussa, Frankfurt) |
| 54,0 | Sikron Feinstmehl (Quarzwerke, Bad Lauterberg) |
| 4,5 | Titan Kronos 2059 (Kronos Titan, Lev.) |
| 0,3 | Bayferrox 920 (Bayer, Lev.) |
| 0,3 | Bayferrox 308 (Bayer, Lev.) |
| 0,8 | Additol XL 251 (Solutia) |
| 1,2 | Additol XL 132 (Solutia) |
| 100 Teile | |

| Komponente B | |
|---|---|
| 5 | Beckopox EH 625 (Solutia) |
| 15 | Beckopox EH 637 (Solutia) |
| 20 | Teile |
| Mischungsverhältnis 5:1= 100:20 | |

### Beispiel 2

2K-Epoxi-Decklack weiß, Hochleistungsbeschichtung, chemikalienfest, lösemittelbeständig.

| Komponente A | |
|---|---|
| 9,1 | Ti-Pure R 902 (Dupont) |
| 1,8 | Talkum AT extra (Norwegian Talc) |
| 38,6 | Epon Resin 1001 CX 75 (Resolution, vormals Shell) |
| 1,9 | Beetle 216-8 (American Cyanamid Co.) |
| 6,0 | MIBK |
| 9,6 | Methoxypropanol |
| 1,2 | Cyclohexanol |
| 7,1 | Xylol |
| 24,7 | Toluol |
| 100 Teile | |

| Komponente B | |
|---|---|
| 16 | Epicure 3214 Curing Agent (Resolution) |
| 9 | MIBK |
| 25 Teile | |
| Mischungsverhältnis 4:1= 100:25 | |

### Beispiel 3

2K-Epoxi-Decklack grün, hochchemikalienbeständig, hochfestkörperhaltig.

| Komponente A | |
|---|---|
| 43,7 | Beckopox EM 443/57XMIBK (Solutia) |
| 3,2 | MPA |
| 36,3 | Chromoxidgrün GN-M (Bayer) |
| 8,3 | Schwerspat EWO (Sachtleben AG) |
| 4,2 | Micro-Talkum AT 1 (Norwegian Talc, Bergen) |
| 0,2 | Aerosil 380 (Degussa) |
| 0,3 | Additol XL 132 (Solutia) |
| 0,5 | Additol XL 255 (Solutia) |
| 3,3 | Xylol |
| 100 Teile | |

| Komponente B | |
|---|---|
| 13,2 | Beckopox Eh 631/55 (Solutia) |
| 11,8 | Methoxypropanol |
| 25 Teile | |
| Mischungsverhältnis 4:1= 100:25 | |

### Beispiel 4

2K-Epoxi-Einlaßgrund, gutes Eindringvermögen in saugende Untergründe, z. B. für Beton zum Zwecke der Porenfüllung und Verfestigung.

| Komponente A | |
|---|---|
| 70 | Eurepox 710 (Schering) |
| 20 | MIBK |
| 7 | Xylol |
| 3 | Butanol |
| 100 Teile | |

| Komponente B | |
|---|---|
| 25 | XE 16 (Schering) |
| Mischungsverhältnis 4:1= 100:25 | |

### Beispiel 5

2K-Epoxi-Straßenmarkierungsfarbe

| Komponente A | |
|---|---|
| 12,5 | Eurepox 7001/75 (Schering) |
| 6,3 | Aceton |
| 6,2 | MPA |
| 33,0 | Vinylite VAGH (25%ig in Aceton) |
| 4,0 | Bentone 38 (Rheox) |
| 4,2 | Microdol 1 (Norwegian Talc) |
| 8,3 | Blancfixe (Sachtleben) |
| 25,0 | Ti-Pure R 902 (Dupont) |
| 0,5 | Aerosil 380 (Degussa) |
| 100 Teile | |

| Komponente B | |
|---|---|
| 12,5 | Versamid 100 (Schering) |
| 7,0 | Aceton |
| 5,5 | MPA |
| 25 Teile | |
| Mischungsverhältnis 4:1= 100:25 | |

### Beispiele 6 bis 8

2K-Epoxi-Korrosionsanstriche für Stahl, Aluminium, Zink

### a.) Haftgrundierung, zinkchromatfrei

| Komponente A | |
|---|---|
| 27,0 | Eurepox 7001/75 (Schering) |
| 8,0 | MIBK |
| 12,0 | Xylol |
| 3,0 | Butanol |
| 10,0 | Schwespat EWO (Sachtleben) |
| 10,0 | Talkum AT extra (Norwegian Talc) |
| 15,0 | Heucophos ZP 10 (Heubach) |
| 15,0 | Bayferrox 130 BM (Bayer) |
| 100 Teile | |

| Komponente B | |
|---|---|
| 15,0 | Euredur 30/55 (Schering) |
| 10,0 | Xylol |
| Mischungsverhältnis 4:1= 100:25 | |

### b.) Zwischenanstrich/Grundfarbe

| Komponente A | |
|---|---|
| 26,0 | Eurepox 7001/75 (Schering) |
| 19,0 | Xylol |
| 9,0 | Butanol |
| 24,0 | Ti-Pure R 902 (Dupont) |
| 13,0 | Talkum AT extra (Norwegian Talc) |
| 9,0 | Blancfixe (Sachtleben) |
| 100 Teile | |

| Komponente B | |
|---|---|
| 15,0 | Euredur 30/55 (Schering) |
| 5,0 | Xylol |
| 5,0 | MPA |
| 25 Teile | |
| Mischungsverhältnis 4:1 = 100:25 | |

### c.) Decklack

| Komponente A | |
|---|---|
| 39,0 | Eurepox 7001/75 (Schering) |
| 10,0 | Xylol |
| 3,0 | Butanol |
| 6,0 | MPA |
| 25,0 | Tl-Pure R 902 (Dupont) |
| 2,0 | Talkum AT extra (Norwegian Talc) |
| 15,0 | Blancfixe (Sachtleben) |
| 100 | Teile |

| Komponente A | |
|---|---|
| 23,0 | Euredur 30/55 |
| 2,0 | Xylol |
| 25 Teile | |
| Mischungsverhältnis 4:1= 100:25 | |

### Beispiel 9

2K-Epoxi-Grundierfüller, Fahrzeugbau, LKW, Container, für Stahl, Aluminium und Zink.

| Komponente A | |
|---|---|
| 25,0 | Beckopox EP 301 (Solutia) |
| 2,0 | Maprenal MF 600 (Solutia) |
| 7,5 | Xylol |
| 3,0 | EPA |
| 1,0 | Bentone 38 (Rheox) |
| 0,3 | Bayferrox 316 (Bayer) |
| 0,5 | Bayferrox 929 (Bayer) |
| 5,5 | Heucophos ZP 10 (Heubach) |
| 11,0 | Schwerspat EWO (Sachtleben) |
| 16,5 | Tl-Pure R 902 (Dupont) |
| 20,0 | Micro Talkum 20M2 (Finntalc) |
| 7,7 | Methoxypropanol |
| 100 Teile | |

| Komponente B | |
|---|---|
| 8,0 | Methoxypropanol |
| 4,5 | Solvesso 100 |
| 4,8 | Xylol |
| 2,3 | Beckopox EP 301 |
| 1,8 | Laromin C 252 (BASF) |
| 2,5 | Versamid 115 (Schering) |
| 1,1 | Härter K54 (BASF) |
| 25 Teile | |
| Mischungsverhältnis 4:1= 100:25 | |

### Beispiele 10 und 11

2K-Epoxi-Haftgrund rotbraun, wasserverdünnbar und 2K-Epoxi-Füller beige, wasserverdünnbar, Fahrzeugbau, LKW, und Container, für Stahl, Aluminium, Zink.

### a.) Haftgrund

| Komponente A | |
|---|---|
| 20,0 | VE-Wasser |
| 8,0 | Härter EH 623/80 (Solutia) |
| 20,0 | Uraflex ZU 401 (DSM) |
| 1,0 | Additol XL 270 (Solutia) |
| 1,5 | Aerosil 300 (Degussa) |
| 1,0 | Zinkweiß Harzsiegel (Heubach) |
| 5,0 | Microdoi 1 (Norwegian Talc) |
| 9,0 | Heucophos ZPA (Heubach) |
| 11,0 | Talkum AT extra (Norwegian Talc) |
| 1,5 | Borchigel L 75 (Borchers) |
| 1,0 | Additol XW 390 (Solutia) |
| 12,0 | VE-Wasser |
| 100 Teile | |

| Komponente B | |
|---|---|
| 25 | Beckopox EP 384 W/53 (Solutia) |
| Mischungsverhältnis 4:1= 100:25 | |

### b.) Füller

| Komponente A | |
|---|---|
| 30,0 | VE-Wasser |
| 8,0 | Beckopox EH 623/80 (Solutia) |
| 2,0 | Borchigel L 75 (Borchers) |
| 1,0 | Additol XW 390 (Solutia) |
| 0,5 | Aerosil 300 (Degussa) |
| 0,5 | Bayferrox 920 (Bayer) |
| 3,0 | Sikron SF 600 (Quarzwerke) |
| 10,0 | Kaolin A (Bassermann) |
| 11,0 | Tiona RCL 472 (SCM) |
| 12,0 | Schwerspat EWO (Sachtleben) |
| 22,0 | VE-Wasser |
| 100 Teile | |

| Komponente B | |
|---|---|
| 25 | Beckopox EP 384 W/53 (Solutia) |
| Mischungsverhältnis 4:1= 100:25 | |

In allen Beispielen wird die Epoxi-Stammkomponente A als 75 % Lösung, vorzugsweise in Xylol, bereitgestellt. Die Härter-Komponente B liegt in flüssiger, ggf. gelöster Form in der Vernetzerhülse vor. Alle Mengen sind als Gewichtsteile angegeben.

Als Epoxid-Harze kommen typenmäßig in Frage:

### Festes Epoxid-Harz:

FK 100 %, Epoxid-Wert 0,200-0,225, Epoxid-Äquivalent 445-500, Viskosität mPas 25 °C, 150-200 (als 40%ige Lsg. in Butyldiglykol), Dichte bei 20 °C, 1,19, Flpkt. >200 °C, Farbzahl Gardner <2.

### 75%ige Lösung:

FK 75 %, LM Xylol, Epoxid-Wert 0,150 - 0,169, Epoxid-Äquivalent 590-666, Viskosität mPas 25 °C ca. 10000, Dichte bei 20 °C, 1,08, Flpkt. 24 °C, Farbzahl Gardner <3.

### Typenbezeichnung:

Epon Resin 1001 CX 75, Epikote 1001/75 Resolution, vormals Shell, Down Resin 671/75, Down Eurepox 7001/75, Schering Beckopox EP 301-x-75 Solution, vormals Vianova.

### Flüssiges Epoxid-Harz:

FK 100 %, mittelviskos, kristallisationsbeständig, Epoxid-Wert 0,52-0,55, Epoxid-Äquivalent 182 - 192, Viskosität mPas 25 °C, 6500- 9000, Farbzahl Gardner <4, Dichte bei 20 °C, 1,17, Flpkt. 180 °C.

### Typenbezeichnung:

Epikote 828, Beckopox EP 116, Dow resin 330, Eurepox 720.

Wasser verdünnbare Systeme werden üblicherweise im Härter angerieben und mit der reinen Epoxidkomponente gehärtet.

### Als Amine für die Härtung kommen beispielsweise in Frage

in Wasser gelöstes, modifiziertes, aliphatisches Polyamin, Viskosität mPas 25 °C, 10000-17000, Jodfarbzahl max. 10, H-Aktiv-Äquivalentgewicht (Festharz) 160, Dichte bei 25 °C. 1,10, Flpkt. >100 °C.

### Typenbezeichnung:

Beckopox Spezialhärter EH 623w, Vianova Härter EH 623/80, Solutia, Härter XB 3984, Ciba.

## Patentansprüche

1. Zweikomponenten-Lacksprühdose mit einer Aerosolzubereitung, insbesondere für die Automobilindustrie und für Autoreparaturzwecke, enthaltend eine Bindemittelkomponente und eine Härterkomponente, **dadurch gekennzeichnet,** daß die Bindemittelkomponente eine härtbare Epoxi-Stammkomponente, Lösemittel und Treibgas enthält und die Härterkomponente einen zur Aushärtung des Epoxibindemittels geeigneten Vernetzer, wobei die Härterkomponente in einer in der Lacksprühdose angeordneten und durch Einwirkung von außen aktivierbaren Vernetzerhülse separat von der Bindemittelkomponente untergebracht ist, wobei die Lacksprühdose eine an einem Teller im Dosenboden angeordnete Innenhülse aus Metall und einen in der Innenhülse angeordneten Stößel zum Aufsprengen der Innenhülse aufweist, der durch den Teller hindurch betätigbar ist und gegen einen am dosenseitigen Ende der Innenhülse angeordneten Deckel wirkt und diesen bei Betätigung absprengt, wobei
a) die Innenhülse bodenseitig eine Metallmembran aufweist, wobei der Stößel in einen außerhalb der Innenhülse und durch den Dosenboden ragenden Auslösestift und einen innerhalb der Innenhülse angeordneten Stößel unterteilt ist oder
b) die Innenhülse mit dem Teller des Dosenbodens integral geformt ist.

2. Lacksprühdose nach Anspruch 1, **dadurch gekennzeichnet, daß** die Epoxi-Stammkomponente in einem Gewichtsverhältnis von 3:1 bis 6:1 zur Härterkomponente vorliegt.

3. Lacksprühdose nach Anspruch 2, **dadurch gekennzeichnet, daß** das Gewichtsverhältnis 4:1 bis 5:1 ist.

4. Lacksprühdose nach einem der vorstehenden Ansprüche, **dadurch gekennzeichnet, daß** die Härterkomponente ein aliphatisches, cycloaliphatisches oder aromatisches Amin, deren Reaktionsprodukte und Addukte, ein Polyaminoamid, Dicyandiamid, cyclisches Säureanhydrid, ein Polyisocyanat oder aminofunktionelles Polyacrylat enthält.

5. Lacksprühdose nach einem der vorstehenden Ansprüche, **dadurch gekennzeichnet, daß** Epoxi-Stammkomponente und Lösemittel in einem Gewichtsverhältnis von 75:25 bis 50:50 vorliegen.

6. Lacksprühdose nach Anspruch 5, gekennzeichnet durch eine Spritzviskosität von 18" bis 30" im DIN-Becher mit 3 mm Düse.

7. Lacksprühdose nach einem der vorstehenden Ansprüche, **dadurch gekennzeichnet, daß** die Bindemittelkomponente als Lösemittel Ketone, Ester, Alkohol und/oder Aromaten enthält.

8. Lacksprühdose nach Anspruch 7, **dadurch gekennzeichnet, daß** das Lösemittel aus Ketonen und Estern im Gewichtsverhältnis von 50:50 bis 90:10 besteht.

9. Lacksprühdose nach Anspruch 8 **dadurch gekennzeichnet, daß** das Lösemittel Aceton und Butylacetat im Gewichtsverhältnis 80:20 bis 90:10 enthält.

10. Lacksprühdose nach einem der vorstehenden Ansprüche, gekennzeichnet durch eine Epoxi-Stammkomponente auf Basis von Crlycidylethern, Glycidylestem, Glycidylaminen, cycloaliphatischen Epoxiden und Glycidylisocyanuraten.

11. Lacksprühdose nach einem der vorstehenden Ansprüche, **dadurch gekennzeichnet, daß** die Bindemittelkomponente 25 bis 60 Gew.-% Treibgas enthält.

12. Lacksprühdose nach Anspruch 11, **dadurch gekennzeichnet, daß** sie Dimethylether, Propan und/oder Butan als Treibgas enthält.

13. Lacksprühdose nach Anspruch 12, **dadurch gekennzeichnet, daß** sie Dimethylether enthält.

14. Lacksprühdose nach Anspruch 13, **dadurch gekennzeichnet, daß** die Bindemittelkomponente 54 Gew.-% Dimethylether enthält.

15. Lacksprühdose nach einem der vorstehenden Ansprüche, **dadurch gekennzeichnet, daß** die Epoxi-Stammkomponente übliche Zusatzstoffe, insbesondere Pigmente, Lösemittel, Stabilisatoren, Mittel zur Beeinflussung der Rheologie und/oder der Viskosität und/oder Emulgatoren enthält.

16. Lacksprühdose nach einem der vorstehenden Ansprüche, gekennzeichnet durch eine Niederdruck-Breitstrahldüse.

17. Lacksprühdose nach einem der vorstehenden Ansprüche, gekennzeichnet durch einen Innendruck von 4,5 bis 6 bar bis 20 °C.

18. Lacksprühdose nach Anspruch 17, gekennzeichnet durch einen Innendruck von 5,0 bis 5,5 bar bis 20 °C.

19. Lacksprühdose nach einem der vorstehenden Ansprüche, **dadurch gekennzeichnet, daß** die Innenhülse aus Aluminium besteht.

## Claims

1. Two-component aerosol paint can with an aerosol preparation, especially for the automotive industry and automotive repair purposes, containing a binding agent component and a curing agent component, **characterized in that** the binding agent component contains an epoxy parent component capable of being cured, solvent and propellant gas, and the curing agent component contains a cross-linking agent capable of causing the epoxy binding agent to cure, with the curing agent component being accommodated in a cross-linking casing which is located in the aerosol paint can separately from the binding agent component and can be activated externally, the aerosol paint can having an inner metal casing attached to a cup in the can bottom, a push rod arranged in the inner casing said rod being actuated through the cup and intended to force open the inner casing and acting on a cover arranged at the can-side end of the inner casing and forcing off said cover when actuated,
the inner casing having a metal membrane arranged on its bottom end, with the push rod being divided into a trigger pin arranged external to the inner casing and projecting through the can bottom and a push element arranged inside the inner casing or
the inner casing forming an integral part with the cup of the can bottom.

2. Aerosol paint can according to claim 1, **characterized in that** a 3:1 through 6:1 ratio by weight exists between the epoxy parent component and the curing agent component.

3. Aerosol paint can according to claim 2, **characterized in that** the ratio by weight is 4:1 through 5:1.

4. Aerosol paint can according to any one of the above claims, **characterized in that** the curing agent component contains an aliphatic, cycloaliphatic or aromatic amine, its reaction products and adducts, a polyaminoamide, dicyandiamide, cyclic acid anhydride, a polyisocyanate or amino-functional polyacrylate.

5. Aerosol paint can according to any one of the above claims, **characterized in that** the epoxy parent component and solvent are present at a ratio by weight of between 75:25 and 50:50.

6. Aerosol paint can according to claim 5, **characterized in that** the spraying viscosity is between 18" and 30" in a DIN beaker with 3-mm nozzle.

7. Aerosol paint can according to any one of the above claims, **characterized in that** the binding agent component contains ketones, esters, alcohol and/or aromatics as solvent.

8. Aerosol paint can according to claim 7, **characterized in that** the solvent consists of ketones and esters of a ratio by weight ranging between 50:50 and 90:10.

9. Aerosol paint can according to claim 8, **characterized in that** the solvent contains acetone and butyl acetate of a ratio by weight ranging between 80:20 and 90:10.

10. Aerosol paint can according to any one of the above claims, **characterized in that** it contains an epoxy parent component based on glycidyl ethers, glycidyl esters, glycidyl amines, cycloaliphatic epoxys and glycidyl isocyanurates.

11. Aerosol paint can according to any one of the above claims, **characterized in that** the binding agent component contains 25 to 60 % by weight of propellant gas.

12. Aerosol paint can according to claim 11, **characterized in that** it contains dimethyl ether, propane and/or butane as propellant gas.

13. Aerosol paint can according to claim 12, **characterized in that** it contains dimethyl ether.

14. Aerosol paint can according to claim 13, **characterized in that** the binding agent component contains 54 % by weight of dimethyl ether.

15. Aerosol paint can according to any one of the above claims, **characterized in that** the epoxy parent component contains customary additives, in particular pigments, solvents, stabilizers, agents used to influence rheology and/or viscosity and/or emulsifiers.

16. Aerosol paint can according to any one of the above claims, **characterized in that** it is provided with a low-pressure flat-spray nozzle.

17. Aerosol paint can according to any one of the above claims, **characterized by** an internal pressure of 4.5 to 6 bar up to 20 °C.

18. Aerosol paint can according to claim 17, **characterized by** an internal pressure of 5.0 to 5.5 bar up to 20 °C.

19. Aerosol paint can according to anyone of the above claims, **characterized in that** the inner casing consists of aluminum.

## Revendications

1. Bombe de peinture à aérosol à deux composants avec une préparation pour aérosol, en particulier pour l'industrie automobile et à des fins de réparation automobile, contenant un composant formant liant et un composant durcisseur, **caractérisée en ce que** le composant formant liant contient un composant époxy de base durcissable, un solvant et un gaz propulseur et le composant durcisseur contient un agent de réticulation convenant pour durcir le liant époxy, le composant durcisseur étant placé séparément du composant formant liant dans une douille à agent de réticulation placée dans la bombe de peinture à aérosol et activable de l'extérieur, la bombe de peinture à aérosol comportant une douille intérieure en metal placée sur un disque dans le fond de la bombe, un poinçon placé dans la douille intérieure pour faire éclater la douille intérieure, qui peut être actionné à travers le disque et agit contre un couvercle placé à l'extrémité côté bombe de la douille intérieure et fait éclater celui-ci en cas d'actionnement,
la douille intérieure présentant côté fond une membrane métallique, le poinçon étant divisé en un ergot de déclenchement extérieur à la douille intérieure et dépassant à travers le fond de la bombe et un poinçon placé à l'intérieur de la douille intérieure ou
la douille intérieure étant formée d'un seul tenant avec le disque du fond de la bombe.

2. Bombe de peinture à aérosol selon la revendication 1, **caractérisée en ce que** le composant époxy de base est présent selon un rapport en poids de 3:1 à 6:1 par rapport au composant durcisseur.

3. Bombe de peinture à aérosol selon la revendication 2, **caractérisée en ce que** le rapport en poids est de 4:1 à 5:1.

4. Bombe de peinture à aérosol selon l'une des revendications précédentes, **caractérisée en ce que** le composant durcisseur contient une amine aliphatique, cycloaliphatique ou aromatique, ses produits de réaction et produits d'addition, un polyaminoamide, un dicyanodiamide, un anhydride d'acide cyclique, un polyisocyanate ou un polyacrylate aminofonctionnel.

5. Bombe de peinture à aérosol selon l'une des revendications précédentes, **caractérisée en ce que** le composant époxy de base et le solvant son présents selon un rapport en poids de 75:25 à 50:50.

6. Bombe de peinture à aérosol selon la revendication 5, **caractérisée par** une viscosité de pulvérisation de 18" à 30" dans le récipient DIN à buse de 3 mm.

7. Bombe de peinture à aérosol selon l'une des revendications précédentes, **caractérisée en ce que** le composant formant liant contient comme solvant des cétones, des esters, un alcool et/ou des aromatiques.

8. Bombe des peinture à aérosol selon la revendication 7, **caractérisée en ce que** le solvant est composé de cétones et d'esters selon un rapport en poids de 50:50 à 90:10.

9. Bombe de peinture à aérosol selon la revendication 8, **caractérisée en ce que** le solvant contient de l'acétone et de l'acétate de butyle selon un rapport en poids de 80:20 à 90:10.

10. Bombe de peinture à aérosol selon l'une des revendications précédentes, **caractérisée par** un composant époxy de base à base de glycidyléthers, de glycidylesters, de glycidylamines, d'époxys cyclo-aliphatiques et de glycidylisocyanurates.

11. Bombe de peinture à aérosol selon l'une des revendications précédentes, **caractérisée en ce que** le composant formant liant contient 25 à 60 % en poids des gaz propulseur.

12. Bombe de peinture à aérosol selon la revendication 11, **caractérisée en ce qu'**elle contient du diméthyléther, du propane et/ou du butane comme gaz propulseur.

13. Bombe de peinture à aérosol selon la revendication 12, **caractérisée en ce qu'**elle contient du diméthyléther.

14. Bombe de peinture à aérosol selon la revendication 13, **caractérisée en ce que** le composant formant liant contient 54 % en poids de diméthyléther.

15. Bombe de peinture à aérosol selon l'une des revendications précédentes, **caractérisée en ce que** le composant époxy de base contient les additifs habituels, en particulier des pigments, des solvants, des stabilisateurs, des moyens pour influencer la rhéologie et/ou la viscosité et/ou des émulsifiants.

16. Bombe de peinture à aérosol selon l'une des revendications précédentes, **caractérisée par** une buse basse pression à jet large.

17. Bombe de peinture à aérosol selon l'une des revendications précédentes, **caractérisée par** une pression interne de 4,5 à 6 bar jusqu'à 20°C.

18. Bombe de peinture à aérosol selon la revendication 17, **caractérisée par** une pression interne de 5,0 à 5,5 bar jusqu'à 20°C.

19. Bombe de peinture à aérosol selon l'une des revendications précédentes, **caractérisée en ce que** la douille intérieure est réalisée en aluminium.
